# EUROPEAN PATENT SPECIFICATION

(11) **EP 2 600 571 B1**
(45) Date of publication and mention of the grant of the patent: **08.10.2014**
(21) Application number: 12194936.6
(22) Date of filing: 30.11.2012
(51) Int. Cl.: H04L 12/46, H02J 7/00, H04L 12/66

(54) **Charger integrating network interface conversion apparatus**
Ladegerät mit integriertem Netzwerkadapter
Dispositif de chargement avec un adapteur de résaux intégrés

(30) Priority: 02.12.2011 CN 201110394924; 24.11.2012 WO PCT/CN2012/085223
(43) Date of publication of application: 05.06.2013
(73) Proprietor: Huawei Device Co., Ltd., Longgang District Shenzhen Guangdong 518129 (CN)
(72) Inventor: Luo, Bingwu, 518129 Shenzhen (CN); Zhu, Yupeng, 518129 Shenzhen (CN); He, Yanguo, 518129 Shenzhen (CN)
(74) Representative: Körber, Martin Hans

(56) References cited:
- US-A1- 2003 226 044
- US-A1- 2005 192 049

## Description

### FIELD OF THE INVENTION

The present invention relates to the field of communication technologies, and in particular, to a charger integrating a network interface conversion apparatus.

### BACKGROUND OF THE INVENTION

With the development of communication technologies, a communication terminal can access a network in more and more manners. However, in view of general classification, the manners may still be classified into two types: cable access and wireless access.

For a cable access technology, a terminal generally adopts an RJ45 interface to access an optical fiber transmission network; while for a wireless access technology, a terminal may access a network through a wireless local area network, or access a network through a wireless wide area network.

Certainly, the wireless access manner and the cable access manner may be exchangeable according to actual needs. For example, a wireless router is a conversion and routing apparatus between an optical fiber access network and a wireless local area network; and a Wi-Fi (wireless fidelity) wireless modem router is a conversion and routing apparatus between a wireless local area network and a wireless wide area network.

However, due to technical limitations, there is always a great difference by comparing a bandwidth of the wireless wide area network with that of the optical fiber access network; and the optical fiber access network fails to support a mobility requirement of an access device because a geographical location of an access environment is relatively fixed. An access routing device, which supports accessing the optical fiber access network or the wireless wide area network upward and serves as an access hotspot of the wireless local area network downward at the same time, also exists. However, a size of the device is often too large, so that the device is not suitable to carry.

Another solution is that a user carries a charger and a network interface conversion device at the same time, and uses them with an access route device as required. However, according to this solution, a user needs to carry multiple peripherals, and plug in or remove them frequently in use, which is not convenient.

US 2005/0192949 A1 discloses a cordless terminal for connection to computer and communication networks and/or information networks. The cordless terminal is made of a data processor, graphical screen, one or more data input devices and a large storage device, the terminal comprises: a mobile terminal communicated in a cordless and continuous manner with a support module, said support module having a power supply source and an outside data communication connection (see claim 4).

### SUMMARY OF THE INVENTION

Embodiments of the present invention disclose a charger integrating a network interface conversion apparatus, which is used with a wireless mobile gateway device. A user does not need to carry another peripheral, and may conveniently operate the wireless mobile gateway device to switch freely between a wireless wide area network and an optical fiber access network, and use a charging function at the same time.

An embodiment of the present invention discloses a charger integrating a network interface conversion apparatus, including a first interface, a power interface, a second interface, a charging circuit, and a network interface adapter circuit.

The power interface is connected to an input end of the charging circuit, an output end of the charging circuit is connected to the first interface and a power supply terminal of the network interface adapter circuit, the second interface is connected to a signal terminal which has a corresponding format, and the signal terminal connected to the second interface belongs to the network interface adapter circuit, and the first interface is connected to a signal terminal which has a corresponding format, and the signal terminal connected to the first interface belongs to the network interface adapter circuit.

The first interface is configured to connect to a wireless mobile gateway device used with the charger, the power interface is configured to connect to a power supply, the second interface is configured to connect to an optical fiber access network, the charging circuit is configured to convert alternating current power into direct current power for charging the wireless mobile gateway device, and the network interface adapter circuit is configured to perform conversion between a data format of the optical fiber access network and a data format supported by the first interface.

The charger further comprises a switch, the output end of the charging circuit is connected to the first interface and the power supply terminal of the network interface adapter circuit through the switch;
the switch is a single-pole double-throw switch, and connects the output end of the charging circuit (104) to the power supply terminal of the network interface adapter circuit or to the first interface alternatively; or
the switch is a single-pole triple-throw switch, and can control the output end of the charging circuit to be connected to one or both of the power supply terminal of the network interface adapter circuit and the first interface.

Another embodiment of the present invention discloses a charger integrating a network interface conversion apparatus, including a first interface, a power interface, a second interface, a charging circuit, and a network interface adapter circuit.

The power interface is connected to an input end of the charging circuit, an output end of the charging circuit is connected to the first interface and a power supply terminal of the network interface adapter circuit, the second interface is connected to a signal terminal which has a corresponding format, and the signal terminal connected to the second interface belongs to the network interface adapter circuit, and the first interface is connected to a signal terminal which has a corresponding format, and the signal terminal connected to the first interface belongs to the network interface adapter circuit.

The first interface is configured to connect to a wireless mobile gateway device used with the charger, the power interface is configured to connect to a power supply, the second interface is configured to connect to an optical fiber access network, the charging circuit is configured to convert alternating current power into direct current power for charging the wireless mobile gateway device, and the network interface adapter circuit is configured to perform conversion between a data format of the optical fiber access network and a data format supported by the first interface.

The charger further comprises: a power management unit; wherein the output end of the charging circuit is connected to the first interface and the power supply terminal of the network interface adapter circuit through the power management unit, that is, the power management unit is connected to the output end of the charging circuit, the power supply terminal of the network interface adapter circuit, and the first interface;
the power management unit is configured to receive a detection result about whether a signal is connected to the second interface; if the detection result indicates that a signal is connected to the second interface, the power management unit connects the output end of the charging circuit to the first interface and the power supply terminal of the network interface adapter circuit at the same time, or cuts connection of the output end of the charging circuit to the first interface and the power supply terminal of the network interface adapter circuit at the same time, or only connects the output end of the charging circuit to the power supply terminal of the network interface adapter circuit; and
if the detection result indicates that no signal is connected to the second interface, the power management unit connects the output end of the charging circuit to the first interface, and cuts connection of the output end of the charging circuit to the power supply terminal of the network interface adapter circuit.

The charger integrating the network interface conversion apparatus disclosed in the embodiments of the present invention is used with the wireless mobile gateway device, so as to enable the wireless mobile gateway device to access the optical fiber access network through the charger in a scenario where the wireless mobile gateway device is connected to the charger and the optical fiber access network exists; and access the wireless wide area network normally in a scenario where the charger is removed. Moreover, the charger integrating the network interface conversion apparatus may be carried by a user conveniently, thereby avoiding trouble of carrying a charger and a network interface conversion device at the same time.

### BRIEF DESCRIPTION OF THE DRAWINGS

FIG. 1 is a schematic structural diagram of a charger integrating a network interface conversion apparatus according to an embodiment of the present invention; and
FIG. 2 is another schematic structural diagram of a charger integrating a network interface conversion apparatus according to an embodiment of the present invention.

### DETAILED DESCRIPTION OF THE EMBODIMENTS

To make the objectives, technical solutions, and advantages of the present invention more clear, the specific embodiments of the present invention are further described in detail with reference to the accompanying drawings in the following.

A charger integrating a network interface conversion apparatus disclosed in the embodiments of the present invention is a peripheral of a wireless mobile gateway device. The wireless mobile gateway device is a currently popular route access device between a wireless wide area network and a wireless local area network. Taking Huawei's E5 series products as an example, a wireless mobile gateway device can convert a 3G (standards such as WCDMA, TD-SCDMA, and CDMA2000) or 2G (generally referring to GPRS or CDMA 1X) signal in the wireless wide area network into a Wi-Fi wireless local area network signal to serve as an Internet access point for network access of other Wi-Fi devices (such as IPAD, cell phone with a Wi-Fi function, and PSP). Generally, a wireless mobile gateway device needs to have a built-in battery, and at the same time, is equipped with a charger for charging the battery. Furthermore, the wireless mobile gateway device generally also has a standard USB interface (such as Micro USB and Mini USB). The USB interface may be configured to connect to the charger as an interface for charging, and may also connect to an external device through a USB connection line or through a USB connector disposed on the wireless mobile gateway device, so as to perform data communication. For example, the USB interface connects to a personal computer, and connects to an optical fiber access network through the personal computer, so that the wireless mobile gateway device uses a resource of the optical fiber access network instead of a resource of the wireless wide area network, converts a 3G or 2G signal into a Wi-Fi wireless local area network signal, and is used as an Internet access point for the network access of the other Wi-Fi devices.

It may be seen from the foregoing description that, an existing wireless mobile gateway device can not only convert a wireless wide area network signal into a Wi-Fi signal, but also converting an optical fiber access network signal transmitted through the USB interface into a Wi-Fi signal, and the USB interface also has a capability of a charger interface. However, the wireless mobile gateway device can only use this function by connecting to an external device that can access the optical fiber access network and has a USB interface, such as the personal computer. This using manner greatly limits freedom of use by a user. For example, a user who has a tablet PC IPAD of APPLE Inc. can access the wireless mobile gateway device through Wi-Fi, but a hotel where the user checks in only provides the optical fiber access network for free. In this case, the user still needs to rely on the wireless wide area network to access a network when using the wireless mobile gateway device in the foregoing description. Therefore, a bandwidth is limited, and high expense on traffic is generated.

In addition, there is also a network interface adapter, which can convert an optical fiber access network signal into a USB interface signal. However, because the wireless mobile gateway device needs to consume power at work when it works as a Wi-Fi access hotspot, and the foregoing network interface adapter also needs to consume power at work, the battery of the wireless mobile gateway device only can support power supply in a short time. Because generally only one USB interface is disposed on the wireless mobile gateway device, only one can be chosen between a charging function and a data transmission function at a certain moment. This using manner causes that network access of a user cannot last long and the foregoing network interface adapter and the charger need to be plugged in and removed alternately.

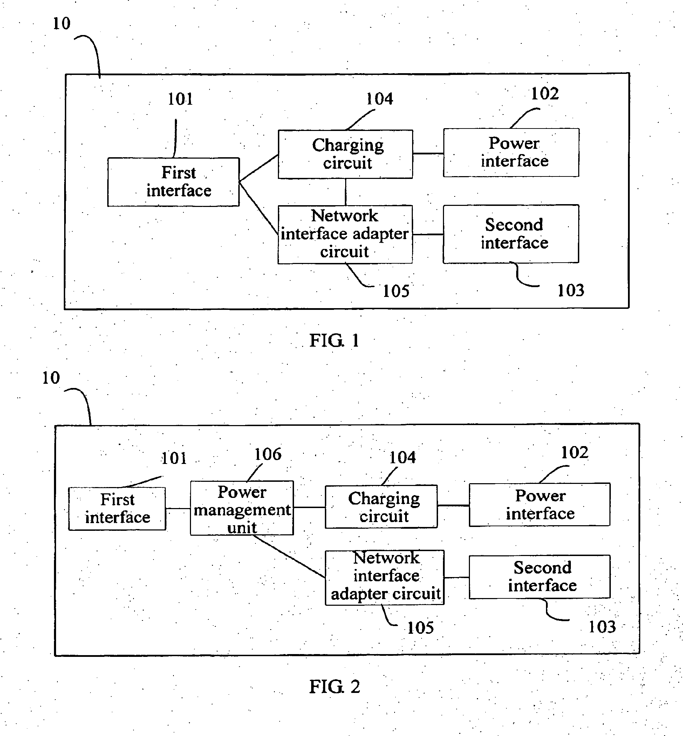

An embodiment of the present invention discloses a charger integrating a network interface conversion apparatus, as shown in FIG. 1.

FIG. 1 shows a charger integrating a network interface conversion apparatus 10, including a first interface 101, a power interface 102, a second interface 103, a charging circuit 104, and a network interface adapter circuit 105. The first interface 101 is configured to connect to a wireless mobile gateway device, may work as a charging interface, and may also transmit data. Typically, the first interface 101 may be a USB interface, and certainly may be another interface that can not only provide a charging function and but also perform data transmission. The power interface 102 is configured to connect to a power supply, where the power interface 102 may be a plug. The second interface 103 may be an optical fiber access network interface, and typically may be an RJ45 interface. The charging circuit 104 is an alternating-current-to-direct-current conversion circuit and a step-down circuit, and, for example, can convert 220V civil alternating current power into 5V direct current power. The circuit is found is common chargers. The network interface adapter circuit 105 is configured to implement interconversion between a signal of the second interface and a signal of the first interface, which may be achieved by adopting a specific chip and a necessary peripheral circuit. For example, if the first interface 101 is a USB interface and the second interface 103 is an RJ45 interface, the network interface adapter circuit 105 may be a LAN9500 solution of the SMSC company. As shown in FIG. 1, connection relationships of the foregoing parts may be as follows: the power interface 102 is connected to an input end of the charging circuit 104, an output end of the charging circuit 104 is connected to the first interface 101 and a power supply terminal of the network interface adapter circuit 105, the second interface 103 is connected to a signal terminal which has a corresponding format, and the signal terminal connected to the second interface 103 belongs to the network interface adapter circuit 105, and the first interface 101 is connected to a signal terminal which has a corresponding format, and the signal terminal connected to the first interface 101 belongs to the network interface adapter circuit 105. It may be understood that, the network interface adapter circuit 105 inevitably has signal terminals of at least two formats, so that conversion between signals of two formats can be implemented, such as interconversion between an optical fiber access network signal and a USB interface signal. The foregoing corresponding formats refer to formats that correspond to connected interfaces. For example, when the second interface 103 is the RJ45 interface, it should be connected to an optical fiber access network signal terminal in the network interface adapter circuit 105; and when the first interface 101 is the USB interface, it should be connected to a USB signal terminal of the network interface adapter circuit 105.

When the charger shown in FIG. 1 is applied, the first interface 101 is connected to the wireless mobile gateway device, and the power interface 102 is connected to a socket of the civil alternating current power. In this case, the charging circuit 104 can convert the alternating current power into the direct current power, charges the wireless mobile gateway device through the first interface 101, and supplies power to the network interface adapter circuit 105 at the same time. If a user needs to use an optical fiber access network at the same time, a network connector may be plugged in the second interface 103, and the network interface adapter circuit 105 can convert the optical fiber access network signal into a signal having a format supported by the first interface 101, and transmit the converted signal to the wireless mobile gateway device; similarly, the network interface adapter circuit 105 converts a signal from the first interface 101 into a signal having a format of the optical fiber access network, and outputs the converted signal through the second interface 103. If the power interface 102 of the charger 10 is not connected to an alternating current power supply, and the second interface 103 is connected to a connector of the optical fiber access network, the wireless mobile gateway device may supply power to the network interface adapter circuit 105 through the first interface 101, so as to support work of the network interface adapter circuit 105, which implements conversion between the optical fiber access network signal and the format supported by the first interface. If the first interface 101 is the USB interface, data exchange between the wireless mobile gateway device and the network interface adapter circuit 105 of the charger 10 may be implemented by adopting an OTG (On-The-Go, a technology for implementing data transmission between two USB devices in a scenario where there is no host) function of a USB system.

It may known from the foregoing that, by using the charger integrating the network interface conversion apparatus disclosed in the embodiment of the present invention, the charging function or a network interface conversion function may be used alone, and these two functions may also be used at the same time, so as to provide convenient choices for the user.

Further, the charger 10 shown in FIG. 1 may also be improved, so as to add a function of switching between the charging function and the network interface conversion function. For example, a manual switch (not shown) may be disposed on the charger 10 shown in FIG. 1. The switch may be disposed between the power interface 102 and the charging circuit 104, disables the charging function of the charger 10 in a manner of cutting off the power, or enables the charging function and the network interface conversion function at the same time by connecting to the power. In this way, the charging circuit is no longer kept connected in a case that a battery of the wireless mobile gateway device is fully charged, which is advantageous to protection of the battery.

Furthermore, the foregoing switch may be a single-pole double-throw switch disposed at the output end of the charging circuit 104, connects the output end of the charging circuit 104 to the power supply terminal of the network interface adapter circuit 105 or to the first interface 101 alternatively. When the first interface 101 is a Mini USB interface, if the output end of the charging circuit 104 is connected to the Mini USB interface, an ID pin of the Mini USB interface is made to be at a high level, or otherwise at a low level. The wireless mobile gateway device may determine a working status of the charger 10 by detecting a level of the ID pin. Or the switch is a single-pole triple-throw switch disposed at the output end of the charging circuit 104, and can control the output end of the charging circuit 104 to be connected to one or both of the power supply terminal of the network interface adapter circuit 105 and the first interface 101.

By adopting a manner of a dedicated switch, the user needs to perform manual operation. To further reduce complexity for the user, as shown in FIG. 2, a power management unit PMU may be added on the basis of the charger 10 shown in FIG. 1. The power management unit 106 is connected to the output end of the charging circuit 104, the power supply terminal of the network interface adapter circuit 105, and the first interface 101. Functions of the power management unit 106 are similar to those of the foregoing single-pole double-throw switch or the foregoing single-pole triple-throw switch, while a difference lies in that, the power management unit 106 may further receive a detection result about whether a signal is connected to the second interface 103. If the detection result indicates that a signal is connected to the second interface 103, it indicates that the charger 10 enables the network interface conversion function. In this case, the power management unit may connect the output end of the charging circuit 104 to the first interface 101 and the power supply terminal of the network interface adapter circuit 105 at the same time, or cut connection of the output end of the charging circuit 104 to the first interface 101 and the power supply terminal of the network interface adapter circuit 105 at the same time, or only connect the output end of the charging circuit 104 to the power supply terminal of the network interface adapter circuit 105. If the detection result indicates that no signal is connected to the second interface 103, it indicates that the charger 10 does not enable the network interface conversion function. In this case, the power management unit may connect the output end of the charging circuit 104 to the first interface 101, and cut connection of the output end of the charging circuit 104 to the power supply terminal of the network interface adapter circuit 105.

When the first interface 101 is a Mini USB interface, if the output end of the charging circuit 104 is connected to the Mini USB interface, an ID pin of the Mini USB interface is made to be at a high level, or otherwise at a low level.

The detection result about whether a signal is connected to the second interface 103 may be from a dedicated second interface detecting apparatus (not shown), which is configured to detect whether a corresponding interface is plugged in the second interface 103, or from a controller in the network interface adapter circuit, where the controller may detect whether the second interface has corresponding signal input.

By applying the charger integrating the network interface conversion apparatus disclosed in the embodiment of the present invention with the wireless mobile gateway device, a charging function or the network interface conversion function may be used alone, and these two functions may also be used at the same time, so as to provide convenient choices for the user. Moreover, the charger exists as a peripheral, which is convenient to carry.

The preceding embodiments are only intended to describe the technical solutions of the present invention, but are not intended to limit the present invention. Although the present invention is described in detail with reference to the foregoing embodiments, those of ordinary skill in the art should understand that they may still make modifications to the technical solutions recorded in the foregoing embodiments, or equivalent replacements to part of the technical features; however, these modifications or replacements do not make the essence of corresponding technical solutions depart from the scope of the technical solutions in the embodiments of the present invention.

## Claims

1. A charger integrating a network interface conversion apparatus, comprising a first interface (101), a power interface (102), a second interface (103), a charging circuit (104); and a network interface adapter circuit (105), wherein
the power interface (102) is connected to an input end of the charging circuit (104), an output end of the charging circuit (104) is connected to the first interface (101) and a power supply terminal of the network interface adapter circuit (105), the second interface (103) is connected to a signal terminal which has a corresponding format, and the signal terminal connected to the second interface (103) belongs to the network interface adapter circuit (105), and the first interface (101) is connected to a signal terminal which has a corresponding format, and the signal terminal connected to the first interface (101) belongs to the network interface adapter circuit (105); and
the first interface (101) is configured to connect to a wireless mobile gateway device used with the charger, the power interface (102) is configured to connect to a power supply, the second interface (103) is configured to connect to an optical fiber access network, the charging circuit (104) is configured to convert alternating current power into direct current power for charging the wireless mobile gateway device, and the network interface adapter circuit (105) is configured to perform conversion between a data format of the optical fiber access network and a data format supported by the first interface (101);
wherein the charger further comprises a switch, the output end of the charging circuit (104) is connected to the first interface (101) and the power supply terminal of the network interface adapter circuit (105) through the switch;
the switch is a single-pole double-throw switch, and connects the output end of the charging circuit (104) to the power supply terminal of the network interface adapter circuit (105) or to the first interface (101) alternatively; or
the switch is a single-pole triple-throw switch, and can control the output end of the charging circuit (104) to be connected to one or both of the power supply terminal of the network interface adapter circuit (105) and the first interface (101).

2. The charger according to claim 1, wherein the first interface (101) is a USB interface and the second interface (103) is an RJ45 interface.

3. The charger according to any one of claims 1 to 2, wherein the first interface (101) is a Mini USB interface; if the output end of the charging circuit (104) is connected to the Mini USB interface, an ID pin of the Mini USB interface is made to be at a high level, or otherwise at a low level.

4. A charger integrating a network interface conversion apparatus, comprising a first interface (101), a power interface (102), a second interface (103), a charging circuit (104); and a network interface adapter circuit (105), wherein
the power interface (102) is connected to an input end of the charging circuit (104), an output end of the charging circuit (104) is connected to the first interface (101) and a power supply terminal of the network interface adapter circuit (105), the second interface (103) is connected to a signal terminal which has a corresponding format, and the signal terminal connected to the second interface (103) belongs to the network interface adapter circuit (105), and the first interface (101) is connected to a signal terminal which has a corresponding format, and the signal terminal connected to the first interface (101) belongs to the network interface adapter circuit (105); and
the first interface (101) is configured to connect to a wireless mobile gateway device used with the charger, the power interface (102) is configured to connect to a power supply, the second interface (103) is configured to connect to an optical fiber access network, the charging circuit (104) is configured to convert alternating current power into direct current power for charging the wireless mobile gateway device, and the network interface adapter circuit (105) is configured to perform conversion between a data format of the optical fiber access network and a data format supported by the first interface (101);
wherein the charger further comprises: a power management unit (106); wherein the output end of the charging circuit (104) is connected to the first interface (101) and the power supply terminal of the network interface adapter circuit (105) through the power management unit (106), that is, the power management unit (106) is connected to the output end of the charging circuit (104), the power supply terminal of the network interface adapter circuit (105), and the first interface (101);
the power management unit (106) is configured to receive a detection result about whether a signal is connected to the second interface (103); if the detection result indicates that a signal is connected to the second interface (103), the power management unit (106) connects the output end of the charging circuit (104) to the first interface (101) and the power supply terminal of the network interface adapter circuit (105) at the same time, or cuts connection of the output end of the charging circuit (104) to the first interface (101) and the power supply terminal of the network interface adapter circuit (105) at the same time, or only connects the output end of the charging circuit (104) to the power supply terminal of the network interface adapter circuit (105); and
if the detection result indicates that no signal is connected to the second interface (103), the power management unit (106) connects the output end of the charging circuit to the first interface (101), and cuts connection of the output end of the charging circuit (104) to the power supply terminal of the network interface adapter circuit (105).

5. The charger according to claim 4, wherein the first interface (101) is a USB interface and the second interface (103) is an RJ45 interface.

6. The charger according to any one of claims 4 to 5, wherein the first interface (101) is a Mini USB interface; if the output end of the charging circuit (104) is connected to the Mini USB interface, an ID pin of the Mini USB interface is made to be at a high level, or otherwise at a low level.

## Patentansprüche

1. Ladegerät, das eine Netzschnittstellenumsetzungsvorrichtung, die eine erste Schnittstelle (101), eine Stromversorgungsschnittstelle (102), eine zweite Schnittstelle (103), einen Ladeschaltkreis (104) umfasst; und einen Netzschnittstellenadapterschaltkreis (105), wobei
die Stromversorgungsschnittstelle (102) mit einem Eingangsende des Ladeschaltkreises (104) verbunden ist, ein Ausgangsende des Ladeschaltkreises (104) mit der ersten Schnittstelle (101) und einem Stromversorgungsanschluss des Netzschnittstellenadapterschaltkreises (105) verbunden ist, die zweite Schnittstelle (103) mit einem Signalanschluss, der ein entsprechendes Format aufweist, verbunden ist und der mit der zweiten Schnittstelle (103) verbundene Signalanschluss zu dem Netzschnittstellenadapterschaltkreis (105) gehört, und die erste Schnittstelle (101) mit einem Signalanschluss, der ein entsprechendes Format aufweist, verbunden ist und der mit der ersten Schnittstelle (101) verbundene Signalanschluss zu dem Netzschnittstellenadapterschaltkreis (105) gehört; und
die erste Schnittstelle (101) konfiguriert ist, sich mit einer drahtlosen Mobilgatewayvorrichtung, die mit dem Ladegerät verwendet wird, zu verbinden, die Stromversorgungsschnittstelle (102) konfiguriert ist, sich mit einer Stromversorgung zu verbinden, die zweite Schnittstelle (103) konfiguriert ist, sich mit einem Lichtleiterzugangsnetz zu verbinden, der Ladeschaltkreis (104) konfiguriert ist, Wechselstromleistung in Gleichstromleistung zum Laden der drahtlosen Mobilgatewayvorrichtung umzusetzen, und der Netzschnittstellenadapterschaltkreis (105) konfiguriert ist, Umsetzung zwischen einem Datenformat des Lichtleiterzugangsnetzes und einem Datenformat, das durch die erste Schnittstelle (101) unterstützt wird, auszuführen;
wobei das Ladegerät ferner einen Schalter umfasst, wobei das Ausgangsende des Ladeschaltkreises (104) mit der ersten Schnittstelle (101) und dem Stromversorgungsanschluss des Netzschnittstellenadapterschaltkreises (105) über den Schalter verbunden ist;
der Schalter ein einpoliger Zweifachumschalter ist und das Ausgangsende des Ladeschaltkreises (104) alternativ mit dem Stromversorgungsanschluss des Netzschnittstellenadapterschaltkreises (105) oder mit der ersten Schnittstelle (101) verbindet; oder
der Schalter ein einpoliger Dreifachumschalter ist und steuern kann, dass das Ausgangsende des Ladeschaltkreises (104) mit dem Stromversorgungsanschluss des Netzschnittstellenadapterschaltkreises (105) und/oder der ersten Schnittstelle (101) verbunden ist.

2. Ladegerät nach Anspruch 1, wobei die erste Schnittstelle (101) eine USB-Schnittstelle ist und die zweite Schnittstelle (103) eine RJ45-Schnittstelle ist.

3. Ladegerät nach einem der Ansprüche 1 bis 2, wobei die erste Schnittstelle (101) eine Mini-USB-Schnittstelle ist; falls das Ausgangsende des Ladeschaltkreises (104) mit der Mini-USB-Schnittstelle verbunden ist, ist ein ID-Anschlussstift der Mini-USB-Schnittstelle auf einen hohen Pegel, oder andernfalls auf einen niedrigen Pegel eingestellt.

4. Ladegerät, das eine Netzschnittstellenumsetzungsvorrichtung, die eine erste Schnittstelle (101), eine Stromversorgungsschnittstelle (102), eine zweite Schnittstelle (103), einen Ladeschaltkreis (104) umfasst; und einen Netzschnittstellenadapterschaltkreis (105), wobei
die Stromversorgungsschnittstelle (102) mit einem Eingangsende des Ladeschaltkreises (104) verbunden ist, ein Ausgangsende des Ladeschaltkreises (104) mit der ersten Schnittstelle (101) und einem Stromversorgungsanschluss des Netzschnittstellenadapterschaltkreises (105) verbunden ist, die zweite Schnittstelle (103) mit einem Signalanschluss, der ein entsprechendes Format aufweist, verbunden ist und der mit der zweiten Schnittstelle (103) verbundene Signalanschluss zu dem Netzschnittstellenadapterschaltkreis (105) gehört, und die erste Schnittstelle (101) mit einem Signalanschluss, der ein entsprechendes Format aufweist, verbunden ist und der mit der ersten Schnittstelle (101) verbundene Signalanschluss zu dem Netzschnittstellenadapterschaltkreis (105) gehört; und
die erste Schnittstelle (101) konfiguriert ist, sich mit einer drahtlosen Mobilgatewayvorrichtung, die mit dem Ladegerät verwendet wird, zu verbinden, die Stromversorgungsschnittstelle (102) konfiguriert ist, sich mit einer Stromversorgung zu verbinden, die zweite Schnittstelle (103) konfiguriert ist, sich mit einem Lichtleiterzugangsnetz zu verbinden, der Ladeschaltkreis (104) konfiguriert ist, Wechselstromleistung in Gleichstromleistung zum Laden der drahtlosen Mobilgatewayvorrichtung umzusetzen, und der Netzschnittstellenadapterschaltkreis (105) konfiguriert ist, Umsetzung zwischen einem Datenformat des Lichtleiterzugangsnetzes und einem Datenformat, das durch die erste Schnittstelle (101) unterstützt wird, auszuführen;
wobei das Ladegerät ferner Folgendes umfasst: eine Leistungsmanagementeinheit (106); wobei das Ausgangsende des Ladeschaltkreises (104) mit der ersten Schnittstelle (101) und dem Stromversorgungsanschluss des Netzschnittstellenadapterschaltkreises (105) über die Leistungsmanagementeinheit (106) verbunden ist, das heißt, die Leistungsmanagementeinheit (106) ist mit dem Ausgangsende des Ladeschaltkreises (104), dem Stromversorgungsanschluss des Netzschnittstellenadapterschaltkreises (105) und der ersten Schnittstelle (101) verbunden;
die Leistungsmanagementeinheit (106) konfiguriert ist, ein Detektionsergebnis darüber, ob ein Signal mit der zweiten Schnittstelle (103) verbunden ist, zu empfangen; falls das Detektionsergebnis angibt, dass ein Signal mit der zweiten Schnittstelle (103) verbunden ist, verbindet die Leistungsmanagementeinheit (106) das Ausgangsende des Ladeschaltkreises (104) gleichzeitig mit der ersten Schnittstelle (101) und dem Stromversorgungsanschluss des Netzschnittstellenadapterschaltkreises (105) oder unterbricht gleichzeitig die Verbindung des Ausgangsendes des Ladeschaltkreises (104) zu der ersten Schnittstelle (101) und dem Stromversorgungsanschluss des Netzschnittstellenadapterschaltkreises (105) oder verbindet nur das Ausgangsende des Ladeschaltkreises (104) mit dem Stromversorgungsanschluss des Netzschnittstellenadapterschaltkreises (105); und
falls das Detektionsergebnis angibt, dass kein Signal mit der zweiten Schnittstelle (103) verbunden ist, verbindet die Leistungsmanagementeinheit (106) das Ausgangsende des Ladeschaltkreises mit der ersten Schnittstelle (101) und unterbricht die Verbindung des Ausgangsendes des Ladeschaltkreises (104) mit dem Stromversorgungsanschluss des Netzschnittstellenadapterschaltkreises (105).

5. Ladegerät nach Anspruch 4, wobei die erste Schnittstelle (101) eine USB-Schnittstelle ist und die zweite Schnittstelle (103) eine RJ45-Schnittstelle ist.

6. Ladegerät nach einem der Ansprüche 4 bis 5, wobei die erste Schnittstelle (101) eine Mini-USB-Schnittstelle ist; falls das Ausgangsende des Ladeschaltkreises (104) mit der Mini-USB-Schnittstelle verbunden ist, ist ein ID-Anschlussstift der Mini-USB-Schnittstelle auf einen hohen Pegel, oder andernfalls auf einen niedrigen Pegel eingestellt.

## Revendications

1. Chargeur intégrant un appareil de conversion d'interface de réseau, comprenant une première interface (101), une interface d'alimentation (102), une seconde interface (103), un circuit de charge (104) ; et un circuit adaptateur d'interface de réseau (105), dans lequel
l'interface d'alimentation (102) est connectée à une extrémité d'entrée du circuit de charge (104), une extrémité de sortie du circuit de charge (104) est connectée à la première interface (101) et à une borne d'alimentation électrique du circuit adaptateur d'interface de réseau (105), la seconde interface (103) est connectée à une borne de signal qui présente un format correspondant, et la borne de signal connectée à la seconde interface (103) fait partie du circuit adaptateur d'interface de réseau (105), et la première interface (101) est connectée à une borne de signal qui présente un format correspondant, et la borne de signal connectée à la première interface (101) fait partie du circuit adaptateur d'interface de réseau (105) ; et
la première interface (101) est configurée pour se connecter à un dispositif de passerelle mobile sans fil utilisé avec le chargeur, l'interface d'alimentation (102) est configurée pour se connecter à une alimentation électrique, la seconde interface (103) est configurée pour se connecter à un réseau d'accès à fibre optique, le circuit de charge (104) est configuré pour convertir une alimentation à courant alternatif en une alimentation à courant continu pour charger le dispositif de passerelle mobile sans fil, et le circuit adaptateur d'interface de réseau (105) est configuré pour effectuer une conversion entre un format de données du réseau d'accès à fibre optique et un format de données pris en charge par la première interface (101) ;
dans lequel le chargeur comprend en outre un commutateur, l'extrémité de sortie du circuit de charge (104) est connectée à la première interface (101) et à la borne d'alimentation électrique du circuit adaptateur d'interface de réseau (105) par l'intermédiaire du commutateur ;
le commutateur est un commutateur unipolaire bidirectionnel, et connecte l'extrémité de sortie du circuit de charge (104) à la borne d'alimentation électrique du circuit adaptateur d'interface de réseau (105) ou à la première interface (101) en alternance ;
ou
le commutateur est un commutateur unipolaire tridirectionnel, et peut commander l'extrémité de sortie du circuit de charge (104) afin qu'elle soit connectée à l'une de la borne d'alimentation électrique du circuit adaptateur d'interface de réseau (105) et de la première interface (101) ou aux deux.

2. Chargeur selon la revendication 1, dans lequel la première interface (101) est une interface USB et la seconde interface (103) est une interface RJ45.

3. Chargeur selon l'une quelconque des revendications 1 à 2, dans lequel la première interface (101) est une interface Mini-USB ; si l'extrémité de sortie du circuit de charge (104) est connectée à l'interface Mini-USB, une broche ID de l'interface Mini-USB est amenée à passer à un niveau haut ou sinon, à un niveau bas.

4. Chargeur intégrant un appareil de conversion d'interface de réseau, comprenant une première interface (101), une interface d'alimentation (102), une seconde interface (103), un circuit de charge (104) ; et un circuit adaptateur d'interface de réseau (105), dans lequel
l'interface d'alimentation (102) est connectée à une extrémité d'entrée du circuit de charge (104), une extrémité de sortie du circuit de charge (104) est connectée à la première interface (101) et à une borne d'alimentation électrique du circuit adaptateur d'interface de réseau (105), la seconde interface (103) est connectée à une borne de signal qui présente un format correspondant, et la borne de signal connectée à la seconde interface (103) fait partie du circuit adaptateur d'interface de réseau (105), et la première interface (101) est connectée à une borne de signal qui présente un format correspondant, et la borne de signal connectée à la première interface (101) fait partie du circuit adaptateur d'interface de réseau (105) ; et
la première interface (101) est configurée pour se connecter à un dispositif de passerelle mobile sans fil utilisé avec le chargeur, l'interface d'alimentation (102) est configurée pour se connecter à une alimentation électrique, la seconde interface (103) est configurée pour se connecter à un réseau d'accès à fibre optique, le circuit de charge (104) est configuré pour convertir une alimentation à courant alternatif en une alimentation à courant continu pour charger le dispositif de passerelle mobile sans fil, et le circuit adaptateur d'interface de réseau (105) est configuré pour effectuer une conversion entre un format de données du réseau d'accès à fibre optique et un format de données pris en charge par la première interface (101) ;
dans lequel le chargeur comprend en outre : une unité de gestion d'alimentation (106) ; dans lequel l'extrémité de sortie du circuit de charge (104) est connectée à la première interface (101) et à la borne d'alimentation électrique du circuit adaptateur d'interface de réseau (105) par l'intermédiaire de l'unité de gestion d'alimentation (106), c'est-à-dire que l'unité de gestion d'alimentation (106) est connectée à l'extrémité de sortie du circuit de charge (104), à la borne d'alimentation électrique du circuit adaptateur d'interface de réseau (105) et à la première interface (101) ;
l'unité de gestion d'alimentation (106) est configurée pour recevoir un résultat de détection indiquant si un signal est connecté à la seconde interface (103) ; si le résultat de détection indique qu'un signal est connecté à la seconde interface (103), l'unité de gestion d'alimentation (106) connecte en même temps l'extrémité de sortie du circuit de charge (104) à la première interface (101) et à la borne d'alimentation électrique du circuit adaptateur d'interface de réseau (105), ou interrompt en même temps la connexion de l'extrémité de sortie du circuit de charge (104) à la première interface (101) et à la borne d'alimentation électrique du circuit adaptateur d'interface de réseau (105), ou connecte uniquement l'extrémité de sortie du circuit de charge (104) à la borne d'alimentation électrique du circuit adaptateur d'interface de réseau (105) ; et
si le résultat de détection indique qu'aucun signal n'est connecté à la seconde interface (103), l'unité de gestion d'alimentation (106) connecte l'extrémité de sortie du circuit de charge à la première interface (101), et interrompt la connexion de l'extrémité de sortie du circuit de charge (104) à la borne d'alimentation électrique du circuit adaptateur d'interface de réseau (105).

5. Chargeur selon la revendication 4, dans lequel la première interface (101) est une interface USB et la seconde interface (103) est une interface RJ45.

6. Chargeur selon l'une quelconque des revendications 4 à 5, dans lequel la première interface (101) est une interface Mini-USB ; si l'extrémité de sortie du circuit de charge (104) est connectée à l'interface Mini-USB, une broche ID de l'interface Mini-USB est amenée à passer à un niveau haut ou sinon, à un niveau bas.
